# FASCICULE DE BREVET EUROPEEN

(11) **EP 0 747 652 B1**
(45) Date de publication et mention de la délivrance du brevet: **11.11.1998**
(21) Numéro de dépôt: 95401097.1
(22) Date de dépôt: 11.05.1995
(51) Int. Cl.: F41A 25/26, F16B 21/16, F41A 31/00

(54) **Dispositif de manoeuvre de la masse reculante d'une pièce d'artillerie**
Vorrichtung zum Bewegen der rücklaufenden Masse einer Geschützes
Actuating device for the recoiling mass of an artillery gun

(43) Date de publication de la demande: 11.12.1996
(73) Titulaire: GIAT INDUSTRIES, 78000 Versailles (FR)
(72) Inventeur: Balbo, Patrick, F-18000 Bourges (FR); Malassenet, Guy, F-18110 Pigny (FR); Grelat, Philippe, F-18000 Bourges (FR); Mandereau, Fabienne, F-18500 Sainte Thorette (FR)
(74) Mandataire: Célanie, Christian

(56) Documents cités:
- DE-A- 1 948 613
- DE-A- 3 345 768
- US-A- 2 408 680

## Description

La présente invention se rapporte principalement à un dispositif de manoeuvre de la masse reculante d'une pièce d'artillerie comme décrit dans le préambule de la revendication 1.

La charge propulsive d'une munition confère, lors du tir d'un coup de canon, au projectile et à la masse reculante de la pièce d'artillerie des impulsions de sens opposés dont résultent la trajectoire balistique du projectile et le recul de la masse reculante. Ce recul est contrôlé par un lien élastique reliant la masse reculante à un berceau fixe absorbant l'énergie cinétique de recul et provoquant une rentrée automatique en batterie pour permettre un nouveau tir. Il est donc primordial de contrôler le bon fonctionnement du lien élastique, lors de la construction, de la maintenance ainsi qu'avant chaque série de tir.

Pour manoeuvrer la masse reculante d'une artillerie, plusieurs méthodes sont utilisées suivant la configuration de montage de l'artillerie. Si celle-ci est montée sur affût, on utilise un treuil à câble dont les extrémités sont fixées de part et d'autre de la masse reculante sur une partie fixe de l'affût, le câble passant sur une poulie installée à l'extrémité du tube.

Si l'artillerie est montée sur véhicule comportant une tourelle, on utilise un treuil à câble dont les extrémités sont fixées de part et d'autre de la masse reculante sur l'extérieur de la tourelle, le câble passant sur une poulie installée à l'extrémité du tube. On peut également manoeuvrer le véhicule, notamment un char qui vient mettre en appui la bouche du tube sur un obstacle suffisamment rigide et continue à avancer de manière à créer un mouvement relatif entre la masse reculante et la partie fixe de l'artillerie.

Le brevet DE-A-3 345 768 décrit un dispositif de manoeuvre de la masse reculante d'une artillerie à l'aide d'un vérin dont la tige est fixée au manchon et le corps à une partie fixe de la tourelle. Le vérin est piloté à l'aide d'un boîtier de commande en relation avec une pompe hydraulique. Ce vérin est toutefois relié de part et d'autre à la masse reculante par une chappe à l'aide d'un axe détachable manuellement

Dans tous les cas de figures connus actuellement, le système utilisé pour manoeuvrer les liens élastiques, lorsque l'artillerie est intégrée sur son support, est un système quasi-statique ne permettant que des vitesses faibles de recul et de rentrée en batterie. Seuls les systèmes à câble peuvent permettre dans une certaine mesure d'obtenir une rentrée en batterie à vitesse réelle en déverrouillant la retenue du câble sur le treuil. Toutefois, cette opération est dangereuse compte tenu de la tension exercée sur le câble et des risques de fouettement de celui-ci au moment du déverrouillage.

C'est par conséquent un but de la présente invention d'offrir un dispositif de manoeuvre de la masse reculante d'une pièce d'artillerie permettant de s'assurer du fonctionnement correct du lien élastique et notamment des récupérateurs et des mécanismes mis en mouvement lors d'une rentrée en batterie pilotée et/ou automatique.

C'est également un but de la présente invention d'offrir un tel dispositif de manoeuvre offrant des conditions de sécurité maximale.

C'est aussi un but de la présente invention d'offrir un dispositif de manoeuvre de la masse reculante facile à mettre en oeuvre.

C'est également un but de la présente invention d'offrir un dispositif de manoeuvre de la masse reculante fiable ayant une construction simple.

Ces buts sont atteints par les caractéristiques de la partie caractérisante de la revendication 1.

Dans un dispositif selon l'invention, l'on effectue au choix une rentrée en batterie pilotée ou une rentrée automatique en batterie. Par exemple, on vérifie d'abord le fonctionnement correct du lien élastique par une rentrée en batterie à faible vitesse pilotée par un vérin et on effectue un essai plus proche du fonctionnement lors d'un tir réel en libérant le point d'attache du vérin en fin de course de compression du lien élastique.

L'invention a principalement pour objet un dispositif de manoeuvre de la masse reculante d'une pièce d'artillerie reliée par un lien élastique à un berceau au moyen d'un vérin dont une extrémité comporte des moyens de fixation sur une partie fixe de l'artillerie et dont l'autre extrémité comporte des moyens de fixation complémentaires au niveau de la masse reculante, **caractérisé** en ce que les moyens de fixation complémentaires peuvent être mis dans une première configuration dans laquelle ils relient l'extémité du vérin à la masse reculante de manière libérable pour permettre un désaccouplement automatique de celle-ci lors du recul sous l'action dudit vérin et assurer ainsi un libre retour de la masse reculante, ou bien peuvent être mis dans une deuxième configuration, dans laquelle ils relient la masse reculante à l'extrémité dudit vérin de manière verrouillée pour permettre une rentrée en batterie pilotée de la masse reculante.

Avantageusement le dispositif comporte des moyens de rétention de la seconde extrémité du vérin monté à rotation par rapport à un axe perpendiculaire à la tige du vérin comportant une protubérance excentrée par rapport à l'axe et en ce que le corps du vérin comporte une tête de désaccouplement munie d'une protubérance excentrée par rapport à la tige prenant appui, en fin de course, sur la protubérance des moyens et en assurant le basculement autour de l'axe avec libération de l'extrémité de la tige du vérin.

Les moyens de rétention comportent deux demi-coquilles montées à rotation dans un berceau (12) et sensiblement symétriques par rapport à un plan perpendiculaire à l'axe de rotation et passant au centre du berceau.

Le dispositif comporte un verrou comprenant au moins une clavette pénétrant en condition verrouillée simultanément dans une fente ménagée sur une face externe du berceau et dans une fente ménagée sur une face externe du berceau et dans une fente ménagée dans l'axe de rotation des moyens de rétention.

L'extrémité de la tige du vérin opposée au corps dudit vérin comporte un axe perpendiculaire à la tige du vérin.

Le dispositif comporte une pompe connectée au vérin permettant d'augmenter la pression dans le cylindre du vérin et une vanne permettant d'augmenter la pression dans le cylindre du vérin et une vanne permettant de diminuer de manière contrôlée la pression régnant dans le cylindre du vérin.

L'invention concerne également une pièce d'artillerie, notamment de moyens ou de gros calibres, comportant une masse reculante et un élément fixe, notamment un berceau, caractérisée en ce qu'elle comporte un dispositif selon l'une quelconque des revendications précédentes reliant l'élément fixe à la masse reculante.

L'invention sera mieux comprise au moyen de la description ci-après et des figures annexées données comme des exemples non limitatifs et sur lesquels :
- la figure 1 est une vue en perspective d'un exemple connu de réalisation d'un dispositif de manoeuvre d'une masse reculante;
- la figure 2 est une vue en perspective d'un exemple de réalisation du dispositif selon la présente invention ;
- la figure 3 est une vue en perspective illustrant l'accrochage de l'axe du vérin sur un point de fixation mis en oeuvre dans le dispositif selon la présente invention ;
- la figure 4 est une vue latérale illustrant la libération de l'axe du vérin ;
- la figure 5 est une vue en perspective de l'exemple préféré de réalisation d'un dispositif de fixation libérable de l'axe du vérin ;
- la figure 6 est une vue en perspective, partiellement éclatée du dispositif de la figure 5 ;
- la figure 7 est une autre vue en perspective partiellement éclatée du dispositif de la figure 5 ;
- la figure 8 est une vue en perspective du dispositif de la figure 5 entièrement démontée.

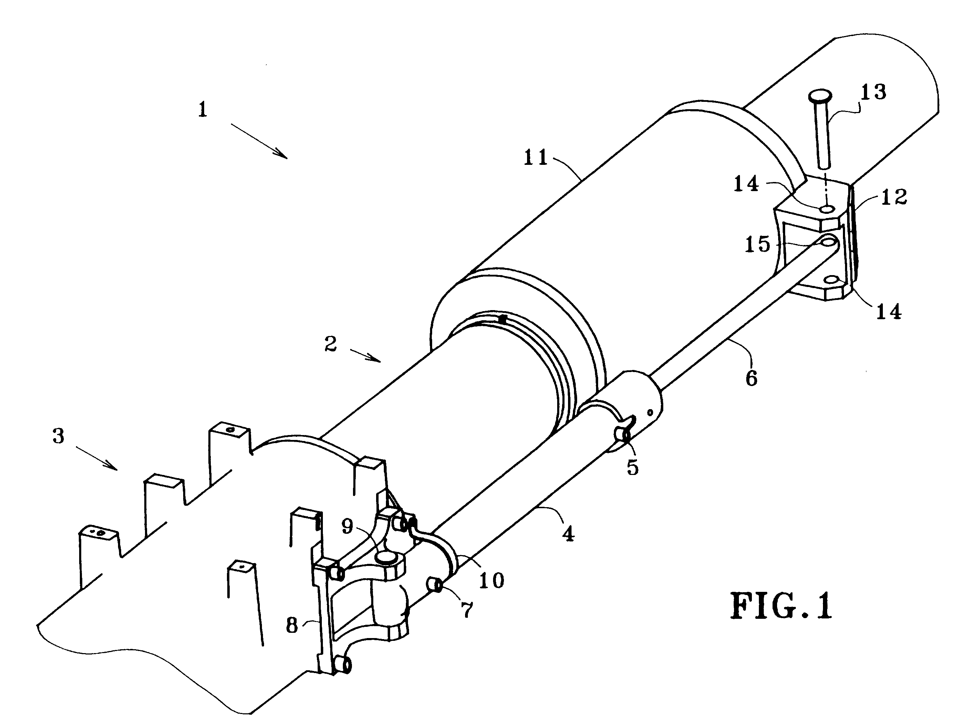

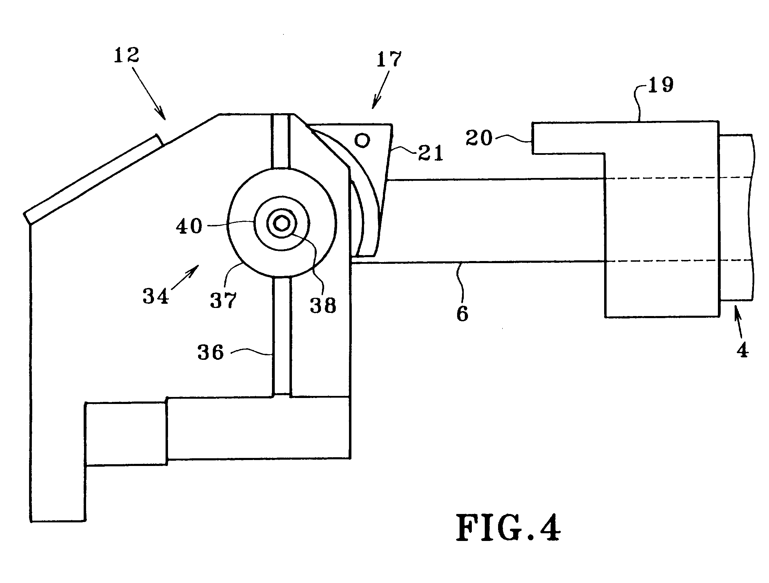

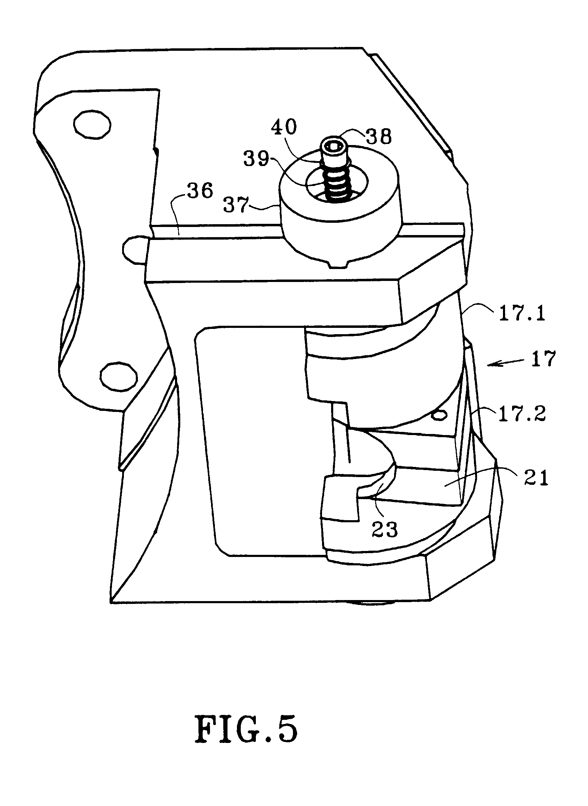

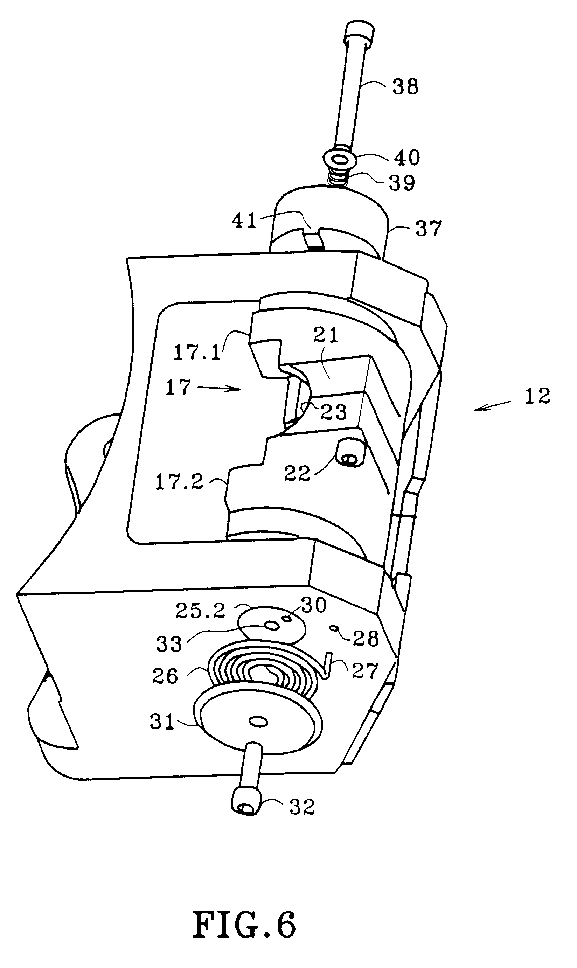

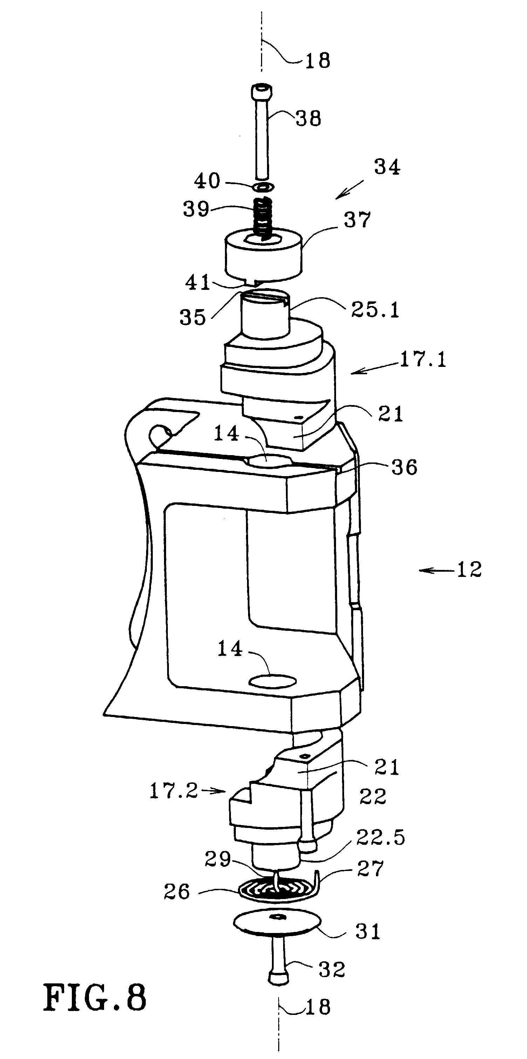

Sur les figures 1 à 8, l'on a utilisé les mêmes références pour désigner les mêmes éléments.

Sur la figure 1, l'on peut voir un canon 1 comportant une masse reculante 2 et un berceau 3 reliés par un lien élastique non représenté ainsi que par un vérin 4, avantageusement un vérin hydraulique double effet comportant un premier orifice 5 d'alimentation en huile sous pression assurant le retrait d'une tige 6 et un orifice 7 assurant la sortie de la tige 6. Avantageusement, les orifices 5 et 7 sont munis de raccords rapides permettant la connexion à une pompe, de préférence motorisée, par exemple électrique, utilisable notamment dans un atelier, à une pompe manuelle ou à une vanne. Une première extrémité du vérin, le corps portant le cylindre dans l'exemple illustré, est fixée sur le berceau 3, sur une partie fixe de l'artillerie ou sur la tourelle, par exemple par l'intermédiaire d'une chape 8, d'un axe 9 à démontage rapide avantageusement complété par un collier 10 limitant les mouvements latéraux du vérin 4. L'extrémité de la tige 6 du vérin 4 opposée au corps est solidarisée avec un élément de la masse reculante 2, notamment avec la boîte à fumée 11 par l'intermédiaire d'une chape, ou d'un berceau 12 et d'un axe 13 à démontage rapide passant par des lumières 14 ménagées dans le berceau 12 et par une lumière 15 ménagée à ladite extrémité de la tige 6 du vérin 4.

Le dispositif de la figure 1 permet d'effectuer une manoeuvre de rentrée en batterie pilotée de la masse reculante 2 du canon 1. Tout d'abord, l'on fixe le vérin 4 à la chape 8 par l'intermédiaire de l'axe 9 et au berceau 12 par l'intermédiaire de l'axe 13. Dans un premier mode de fonctionnement, la pompe est connectée à l'orifice 5, l'orifice 7 du vérin 4 étant mis à la bâche, c'est-à-dire que l'on récupère dans un réservoir l'huile s'écoulant de l'orifice 7 à la pression ambiante. Les récupérateurs du lien élastique sont parés. On manoeuvre en recul la masse reculante 2 par l'action de la pompe et du vérin 4.

Lorsque le recul désiré a été atteint, l'on arrête la pompe et l'on maîtrise la pression régnant dans le cylindre du vérin 4 par l'intermédiaire d'une vanne connectée à l'orifice 5. Le récupérateur du lien élastique assure la rentrée en batterie de la masse reculante.

Dans un deuxième mode de fonctionnement du dispositif de la figure 1, les récupérateurs ne sont pas parés et la manoeuvre de rentrée en batterie est assurée par la connexion de la pompe à l'orifice 7, l'orifice 5 étant mis à la bâche. L'on effectue la dépose du vérin 4 en enlevant les axes à démontage rapide 9 et 13 et, éventuellement, le collier 10 pour procéder à un tir ou à une série de tirs.

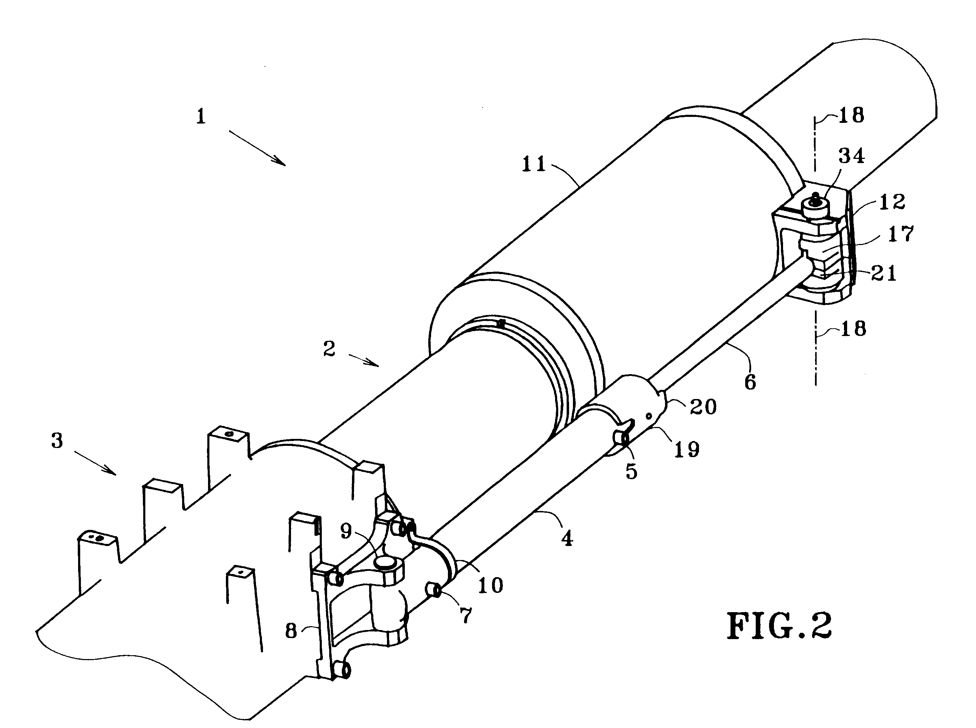

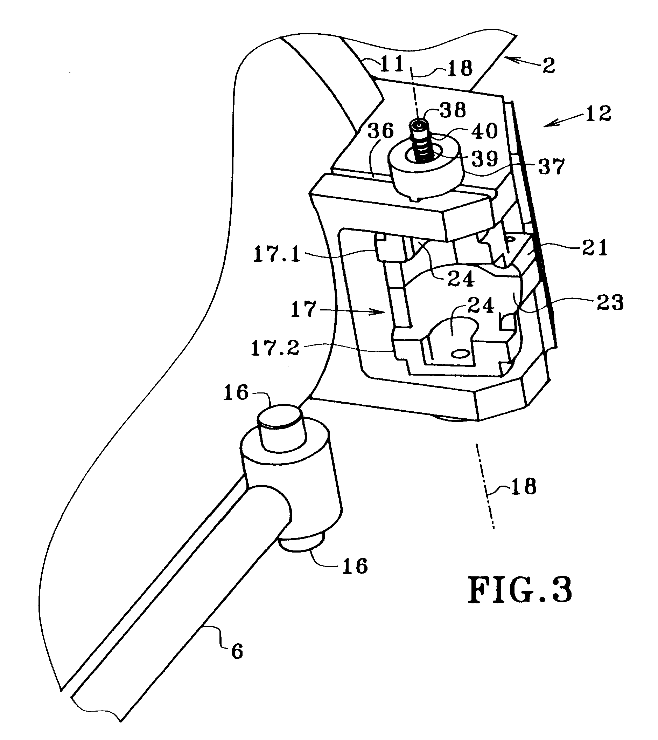

Sur la figure 2, on peut voir un exemple particulièrement avantageux du dispositif selon la présente invention comportant à une des extrémités du vérin 4, à l'extrémité de la tige 6 dans l'exemple illustré, des moyens de fixation libérables en fin de course. L'extrémité de la tige 6 du vérin 4 comporte un épaulement ou, avantageusement, comme illustré sur la figure 3, un axe transversal 16 perpendiculaire à la tige 6. Dans l'exemple avantageux illustré sur les figures 2 à 8, le berceau 12 est muni des moyens 17 de rétention basculant autour d'un axe 18, confondu dans la condition accrochée avec l'axe 16 de l'extrémité de la tige 6 du vérin 4. Avantageusement, le basculement des moyens 17 de rétention et, partant, la libération de l'extrémité de la tige 6 sont commandés mécaniquement en fin de course de recul. Par exemple, le corps du vérin 4 comporte à son extrémité dont émerge la tige 6 une tête de désaccouplement 19 comportant une protubérance 20 prenant appui à une distance d non nulle de l'axe 18, en fin de recul, sur une protubérance 21 des moyens 17 de rétention et en assure le basculement autour de l'axe 18.

La protubérance 21 des moyens 17 de rétention de l'extrémité de la tige 6 du vérin 4 comporte, par exemple, un méplat dirigé vers la protubérance 20 de la tête de désaccouplement 19.

Dans l'exemple avantageux illustré, les moyens 17 de rétention comportent deux éléments 17.1 et 17.2 symétriques par rapport à un plan perpendiculaire à l'axe 18 et passant au milieu du berceau 12. Les éléments 17.1 et 17.2 sont par exemple réunis par une vis 22. Les moyens 17 de rétention comportent une découpe 23 arrondie laissant pénétrer la tige 6 dans le berceau 12 et des cavités 24 de réception de l'axe 16. Les éléments 17.1 et 17.2 comportent des axes 25.1, respectivement 25.2, pénétrant dans les lumières 14 du berceau 12.

Avantageusement, le berceau 12 est équipé avec des moyens exerçant un couple de rappel vers la condition fermée sur les moyens 17 de rétention. Le moyen 26 comporte, par exemple, un ressort spiral dont une première extrémité 27 pénètre dans une lumière 28 pratiquée dans le berceau 12 et dont une seconde extrémité 29 pénètre dans une lumière excentrée 30 pratiquée dans l'axe 25.2 de l'élément 17.2 des moyens 17 de rétention. Dans l'exemple avantageux illustré, le ressort 26 est maintenu en place grâce à une rondelle 31 et une vis 32 pénétrant dans un taraudage 33 pratiqué dans l'axe 25.2 de l'élément 17.2 des moyens 17 de rétention.

Dans une première variante de réalisation, le dispositif de la figure 2 assure uniquement le contrôle de l'entrée en batterie automatique de la masse reculante 2 du canon 1. Dans un tel cas, l'on peut avantageusement utiliser un vérin 4 à simple effet travaillant en traction.

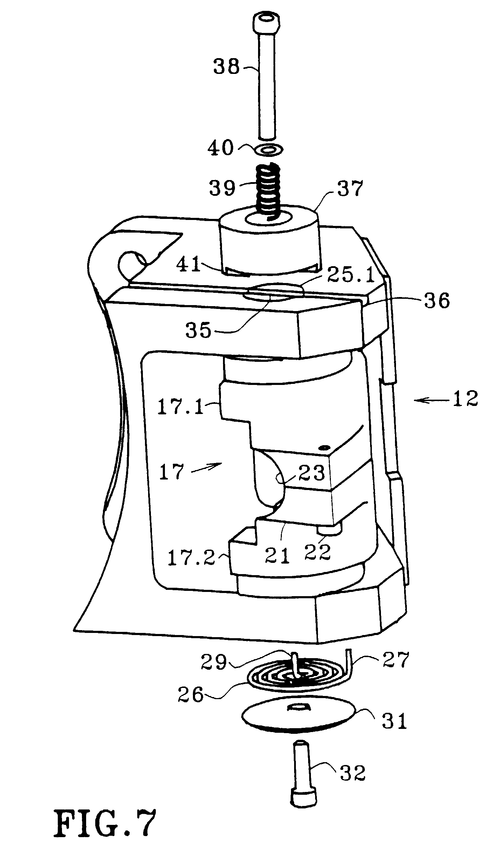

Avantageusement, le dispositif de la figure 2 permet d'effectuer, au choix, une rentrée en batterie automatique ou une rentrée en batterie pilotée. Dans l'exemple avantageux illustré, le dispositif comporte des moyens 34 de verrouillage, dans la condition fermée, des moyens 17 de rétention de l'axe 16 correspondant à la condition accrochée de la tige 6. Dans l'exemple avantageux illustré, l'axe 25.1 de l'élément 17.1 comporte une fente 35 et la face externe du berceau 12 recevant l'élément 17.1 comporte une fente 36. Dans la condition fermée des moyens 17, les fentes 35 et 36 sont alignées. Un verrou 37 fixé par une vis 38 vissée dans un taraudage (non représenté) de l'axe 25.1 maintenu par un ressort 39, et une rondelle 40 comporte une ou avantageusement deux clavettes 41 qui, dans la condition verrouillée, pénètrent simultanément dans les fentes 35 et 36 (figure 7) et, dans une condition non verrouillée (figures 2, 3, 5, 6 et 8), sont tournées, par exemple à 90° par rapport aux fentes 35 et 36 et reposent sur la face externe du berceau 12.

Après avoir monté le dispositif selon l'invention sur l'artillerie, l'accouplement peut être réalisé en faisant sortir hydrauliquement la tige 6 du vérin 4 jusqu'à ce que l'axe 16 qui l'équipe pénètre à l'intérieur des cavités 24 des moyens 17 de rétention qui ont été préalablement tournés d'environ 90° et maintenus manuellement dans cette position pendant cette phase d'accrochage. Une fois l'axe 16 en position dans les cavités 24, l'on relâche les moyens 17 de rétention qui, grâce au ressort 26, se mettent en condition accrochée. Dans un premier mode de fonctionnement avec rentrée automatique en batterie de la masse reculante 2, les clavettes 41 du verrou 37 sont placées perpendiculairement aux fentes 35 et 36. La pompe est connectée à l'orifice 5, l'orifice 7 étant mis à la bâche. L'on met en marche la pompe et, ainsi, on fait reculer la masse reculante 2 jusqu'à ce qu'on obtienne l'appui de la protubérance 20 de la tête de désaccouplement 19 du vérin 4 sur la protubérance 21 des moyens 17 de rétention, qui au couple de rappel du ressort 26 près, sont libres de tourner autour de l'axe 18. Compte tenu du décalage par rapport à l'axe 18 des protubérances 20 et 21, la montée en pression dans le vérin 4 par l'intermédiaire de l'alimentation de la pompe par l'orifice 5 fait pivoter les moyens 17 de rétention jusqu'à ce que la position des cavités 24 permettent de laisser échapper l'axe 16. A ce moment là, l'effort exercé par les récupérateurs du lien élastique prend la relève et ramène librement en batterie la masse reculante 2. Le collier 10 limite le débattement latéral du vérin lors de la libération de l'axe 16. L'opération pourra être renouvelée, après une baisse de pression de l'huile au niveau de l'orifice 5 du vérin 4, après un nouvel accrochage de l'extrémité de la tige 6 du vérin 4 portant l'axe 16 dans les moyens 17 de rétention.

Dans un deuxième mode de réalisation, après accrochage de l'extrémité de la tige 6 du vérin 4 dans les moyens de rétention 17, l'on tourne les verrous 37 de 90°, ce qui permet au ressort 39 de faire pénétrer les clavettes 41 simultanément dans les fentes 35 et 36 et assurent ainsi le verrouillage des moyens 17 de rétention. Dans cette condition, le dispositif de la figure 1 permet une manoeuvre avec rentrée en batterie pilotée analogue au fonctionnement du dispositif de la figure 1.

La présente invention s'applique notamment au contrôle du bon fonctionnement lors du recul d'une pièce d'artillerie.

La présente invention s'applique principalement au contrôle du bon fonctionnement du lien élastique d'une pièce d'artillerie de moyens ou de gros calibres lors de la rentrée en batterie de la masse reculante.

## Revendications

1. Dispositif de manoeuvre de la masse reculante (2) d'une pièce d'artillerie (1) reliée par un lien élastique à un berceau (3) au moyen d'un vérin (4) dont une extrémité comporte des moyens (8, 9) de fixation sur une partie fixe (3) de l'artillerie et dont l'autre extrémité comporte des moyens de fixation complémentaires (12, 16, 17) au niveau de la masse reculante (2), **caractérisé** en ce que les moyens de fixation complémentaires (12, 16, 17) peuvent être mis dans une première configuration dans laquelle ils relient l'extémité du vérin (4) à la masse reculante (2) de manière libérable pour permettre un désaccouplement automatique de celle-ci lors du recul sous l'action dudit vérin et assurer ainsi un libre retour de la masse reculante (2), ou bien peuvent être mis dans une deuxième configuration, dans laquelle ils relient la masse reculante (2) à l'extrémité dudit vérin (4) de manière verrouillée pour permettre une rentrée en batterie pilotée de la masse reculante (2).

2. Dispositif selon la revendication 1, caractérisé en ce qu'il comporte des moyens (17) de rétention de la seconde extrémité du vérin (4) monté à rotation par rapport à un axe (18) perpendiculaire à la tige (6) du vérin (4) comportant une protubérance (21) excentrée par rapport à l'axe (18) et en ce que le corps du vérin (4) comporte une tête de désaccouplement (19) munie d'une protubérance (20) excentrée par rapport à la tige (6) prenant appui, en fin de course, sur la protubérance (21) des moyens (17) et en assurant le basculement autour de l'axe (18) avec libération de l'extrémité de la tige (6) du vérin (4).

3. Dispositif selon la revendication 2, caractérisé en ce que les moyens (17) de rétention comportent deux demi-coquilles (17.1, 17.2) montées à rotation dans un berceau (12) et sensiblement symétriques par rapport à un plan perpendiculaire à l'axe de rotation (18) et passant au centre du berceau (12).

4. Dispositif selon l'une des revendications 1 à 3, caractérisé en ce qu'il comporte un verrou (37) comprenant au moins une clavette (41) pénétrant en condition verrouillée simultanément dans une fente (36) ménagée sur une face externe du berceau (12) et dans une fente (35) ménagée sur une face externe du berceau (12) et dans une fente (35) ménagée dans l'axe de rotation (25.1) des moyens (17) de rétention.

5. Dispositif selon l'une des revendications 1 à 4, caractérisé en ce que l'extrémité de la tige (6) du vérin (4) opposée au corps dudit vérin (4) comporte un axe (13, 16) perpendiculaire à la tige (6) du vérin (4).

6. Dispositif selon l'une quelconque des revendications 1 à 5, caractérisé en ce qu'il comporte une pompe connectée au vérin (4) permettant d'augmenter la pression dans le cylindre du vérin et une vanne permettant d'augmenter la pression dans le cylindre du vérin et une vanne permettant de diminuer de manière contrôlée la pression régnant dans le cylindre du vérin (4).

7. Pièce d'artillerie, notamment de moyens ou de gros calibres, comportant une masse reculante (2) et un élément fixe, notamment un berceau (3), caractérisée en ce qu'elle comporte un dispositif selon l'une quelconque des revendications précédentes reliant l'élément fixe (3) à la masse reculante (2).

## Patentansprüche

1. Manövriervorrichtung der Rückstoßmasse (2) eines Artilleriegeschützes (1), das mit einer elastischen Verbindung mit einem Bock (3) mit einem Zylinder (4) verbunden ist, von dem ein Ende Mittel (8, 9) zur Befestigung an einem stationären Teil (3) des Geschützes umfaßt und das andere Ende ergänzende Mittel (12, 16, 17) zur Befestigung auf der Ebene der Rückstoßmasse (2) aufweist, gekennzeichnet dadurch, daß die ergänzenden Befestigungsmittel (12, 16, 17) in eine erste Konfiguration gebracht werden können, in der sie das Ende des Zylinders (4) mit der Rückstoßmasse (2) freigebbar verbinden, um das automatische Abkoppeln der Rückstoßmasse (2) beim Rückstoß unter Einwirkung des besagten Zylinders zu erlauben und so den freien Rücklauf der Rückstoßmasse (2) sicherzustellen, oder die in eine zweite Konfiguration gebracht werden können, in der sie die Rückstoßmasse (2) mit dem Ende des besagten Zylinders (4) in gesperrter Art verbinden, um ein gesteuertes Einfahren der Rückstoßmasse (2) in Batterie zu erlauben.

2. Vorrichtung gemäß dem Anspruch 1, gekennzeichnet dadurch, daß sie Mittel (17) zum Zurückhalten des zweiten Endes des Zylinders (4) umfassen, der drehend bezogen auf eine Achse (18) im rechten Winkel zum Schaft (6) des Zylinders (4) montiert ist und einen Vorsprung (21) aufweist, der in bezug auf die Achse (18) exzentrisch liegt und dadurch, daß der Körper des Zylinders (4) einen Abkoppelkopf (19) mit einem Vorsprung (20) aufweist, der in bezug auf den Schaft (6) exzentrisch liegt und am Ende der Bewegung an den Vorsprung (21) der Rückhaltemittel (17) aufliegt und das Schwenken um die Achse (18) mit Freigabe des Endes des Schafts (6) des Zylinders (4) gewährleistet.

3. Vorrichtung gemäß dem Anspruch 2, gekennzeichnet dadurch, daß die Rückhaltemittel (17) zwei Halbschalen (17.1, 17.2) umfassen, die in einem Bock (12) drehend und in etwa symmetrisch zu einer Ebene montiert sind, die zur Drehachse (18) symmetrisch ist und durch die Mitte des Bocks (12) verlaufen.

4. Vorrichtung gemäß einem der Ansprüche 1 bis 3, gekennzeichnet dadurch, daß sie einen Riegel (37) mit mindestens einem Keil (41) umfaßt, der in gesperrter Stellung gleichzeitig in einen Schlitz (36) auf der Außenseite des Bocks (12) und in einen Schlitz (35) im Drehbolzen (25.1) der Rückhaltemittel (17) eindringt.

5. Vorrichtung gemäß einem der Ansprüche 1 bis 4, gekennzeichnet dadurch, daß das Ende des Schafts (6) des Zylinders (4) auf der Seite gegenüber dem Körper des besagten Zylinders (4) einen Bolzen (13, 16) aufweist, der im rechten Winkel zum Schaft (6) des Zylinders (4) liegt.

6. Vorrichtung gemäß einem beliebigen der Ansprüche 1 bis 5, gekennzeichnet dadurch, daß sie eine Pumpe umfaßt, die an den Zylinder (4) angeschlossen ist und die Steigerung des Drucks im Zylinder erlaubt, sowie einen Schieber zur Steigerung des Drucks im Zylinder und einen Schieber zur gesteuerten Verringerung des Drucks, der im Zylinder (4) herrscht.

7. Artilleriegeschütz vor allem mittleren oder kleinen Kalibers mit einer Rückstoßmasse (2) und einem stationären Element, nämlich einem Bock (3), gekennzeichnet dadurch, daß es eine Vorrichtung gemäß einem beliebigen der oben erwähnten Ansprüche umfaßt, die das stationäre Element (3) mit der Rückstoßmasse (2) verbindet.

## Claims

1. A manoeuvring device for the recoiling mass (2) of an artillery (1) linked by a elastic mechanism to a cradle (3) by means of a jack (4), one end of which being provided with fastening means (8, 9) on a fixed part (3) of the artillery, and the other one being provided with fastening additional means (12, 16, 17) on the recoiling mass (2), characterised in that the fastening additional means (12,16 17) may be placed according to a first arrangement in which it connects the end of the jack (4) to the recoiling mass (2) freely allowing an automatic uncoupling thereof during the recoil by by means of the jack and ensure thereby a free return of the recoiling mass (2), or in a second arrangement in which it connects the recoiling mass (2) locked to the end of said jack (4) to authorize a commanded pilot counter-recoil of the recoiling mass.

2. A device according to Claim 1, characterised in that it comprises retention means (17) for the second end of the jack (4) mounted in rotation with respect to an axis (18) which is perpendicular to the rod (6) of the jack (4) comprising a protuberance (21) which is out of centre with respect to the axis (18) and in that the body of the jack (4) comprises an uncoupling head (19) fitted with a protuberance (20) which is out of centre with respect to the rod (6) and bearing, at the end of the stroke, on the protuberance (21) of the retention means (17) and ensuring its swing around the axis (18) thereby freeing the end of the jack rod (4).

3. A device according to claim 2, characterised in that the retention means (17) comprises two half-shells 17.1, 17.2) mounted in rotation in a cradle (12) and roughly symmetrical with respect to a perpendicular plane to the rotational axis (18) passing through the centre of the cradle (12).

4. A device according to one of claims 1 to 3, characterised in that it comprises a lock (37) comprising at least one hasp (41) which in its locked position simultaneously penetrates in a slot (36) arranged on an outer face of the cradle (12) and in a slot (35) arranged in the rotational axis (25.1) of the retention means (17).

5. A device according to any one of the claims 1 to 4, characterised in that the end of the rod (6) of the jack (4) opposite the body of the said jack (4) comprises an axle (13, 16) perpendicular to the rod (6) of the jack (4).

6. A device according to any one of the claims 1 to 5, characterised in that it comprises a pump connected to the jack (4) allowing the pressure in the cylinder of the jack to be increased and a valve allowing the pressure in the cylinder of the jack (4) to be decreased to order, and a valve allowing the pressure to be decreased pilot commanded in the cylinder of teh jack (4).

7. An artillery, notably medium or large calibre, comprising a recoiling mass (2) and a fixed element, notably a cradle (3), characterised in that it comprises a device according to the invention linking the fixed element (3) to the recoiling mass (2).
